# EUROPÄISCHE PATENTSCHRIFT

(11) **EP 2 512 684 B1**
(45) Veröffentlichungstag und Bekanntmachung des Hinweises auf die Patenterteilung: **11.03.2015**
(21) Anmeldenummer: 10798032.8
(22) Anmeldetag: 13.12.2010
(51) Int. Cl.: B04C 5/04, B04C 5/13, B04C 5/181, B04C 9/00

(54) **ABSCHEIDEVORRICHTUNG MIT EINEM GRAVITATIONSVORABSCHEIDER GEFOLGT VON EINEM ZENTRIFUGALABSCHEIDER**
SEPARATING DEVICE WITH A PRIMARY GRAVITATION SEPARATOR FOLLOWED BY A CENTRIFUGAL SEPARATOR
ENSEMBLE DE SÉPARATION COMPOSÉ D'UN SÉPARATEUR PAR GRAVITÉ SUIVI D'UN SÉPARATUER CENTRIFUGE

(30) Priorität: 15.12.2009 EP 09179221
(43) Veröffentlichungstag der Anmeldung: 24.10.2012
(73) Patentinhaber: BASF SE, 67056 Ludwigshafen (DE)
(72) Erfinder: HALPAP, Jörg, 68167 Mannheim (DE); BODE, Andreas, 68163 Mannheim (DE); HERRMANN, Eberhard, 67227 Frankenthal (DE); LINSENBÜHLER, Markus, 69121 Heidelberg (DE); SACHWEH, Bernd, 67149 Meckenheim (DE); PILZ, Michael, 69502 Hemsbach (DE); MERTLER, Michael, 67251 Freinsheim (DE); MEIER, Matthias Wilhelm, 67069 Ludwigshafen (DE)
(86) Internationale Anmeldenummer: PCT/EP2010/069516
(87) Internationale Veröffentlichungsnummer: WO 2011/082972

(56) Entgegenhaltungen:
- EP-A2- 0 473 566
- DE-A1- 3 930 951
- GB-A- 700 511
- GB-A- 2 239 193
- JP-A- 62 074 425

## Beschreibung

Die Erfindung betrifft eine Vorrichtung zum Abscheiden von Flüssigkeitströpfchen aus einem diese enthaltenden Einsatzgasstrom.

Zentrifugaltropfenabscheider, auch als Zyklone bezeichnet, sind in der Verfahrenstechnik bekannt und werden beispielsweise zum Abscheiden von Flüssigkeitströpfchen aus diese enthaltenden Gasströmen eingesetzt. Zentrifugaltropfenabscheider (Zyklone) sind rotationssymmetrische Apparate, mit in der Regel vertikaler Rotationsachse, häufig überwiegend zylindrische Apparate. Indem das aufzutrennende zweiphasige, Flüssigkeits-/Gas-Gemisch tangential zugeführt wird, wird diesem eine spiralförmige Bewegung entlang der Innenwand des Apparates aufgeprägt, wobei unter Einwirkung der Zentrifugalkraft eine Auftrennung der Komponenten des Gemisches in Abhängigkeit von der Dichte derselben erfolgt. Die schwereren Flüssigkeitströpfchen werden aus dem Gas an den Innenwänden des Zentrifugaltropfenabscheiders abgeschieden, sammeln sich im unteren Bereich des Apparates und werden über einen Abführstutzen ausgetragen.

Im Falle von viskosen und/oder klebrigen und/oder zu Verkrustungen neigenden Flüssigkeiten und/oder Feststoffe enthaltenden Flüssigkeiten kann das Problem auftreten, dass sich die Flüssigkeitströpfchen oder Feststoffkrusten an den Innenwänden des Apparates ablagern, nicht mehr über den Abführstutzen ablaufen, so dass es zum Fowling verbunden mit einer sich verschlechternden Abscheidung und schließlich zum Fluten des Apparates kommt.

Zum Abscheiden von Flüssigkeitströpfchen aus Gasströmen für niedrige Flüssigkeitsbeladungen sind auch weitere Apparate, insbesondere Lamellenabscheider, Dralltropfenabscheider oder Drahtgestricke (wire mesh), bekannt. In diesen Apparaten kann es jedoch durch Ablagerungen zu Krustenbildung kommen, so dass nicht über einen längeren Zeitraum konstant hohe Abscheidegrade erreicht werden können, weil die für die Abscheidung relevanten Elemente durch Belege in kürzester Zeit deaktiviert werden oder verstopfen.

In der Regel erfolgt eine diskontinuierliche oder auch kontinuierliche Reinigung dieser Apparate mittels Sprühdüsen. Die Spülflüssigkeit wird in den Gasstrom dispers eingesprüht und muss aus diesem wieder abgeschieden werden. Zentrifugaltropfenabscheider sind dagegen deutlich weniger verschmutzungsanfällig und können zudem auch für hohe Flüssigkeitsbeladungen verwendet werden.

Alle Tropfenabscheider haben jeweils eine Obergrenze für die Flüssigkeitsbeladung. In der Regel ist diese Grenze bei den Zentrifugaltropfenabscheidern am höchsten. Für sehr hohe Abscheidegrade > 99 % liegt diese Grenze bei den Zentrifugaltropfenabscheidem bei einer maximalen Flüssigkeitsbeladung (Flüssigkeitsgrenzbeladung) häufig bei etwa 10 I Flüssigkeit pro m³ Gas. Bei höheren Beladungen kommt es zum Mitriss von Flüssigkeit ins Reingas. Dies kann bei sehr hohen Beladungen schwallartig erfolgen.

Gasströme, die eine höhere Flüssigkeitsbeladung als die Grenzbeladung für einen Zentrifugaltropfenabscheider aufweisen, müssen daher vor der Zuführung zu einem Zentrifugaltropfenabscheider in einem Vorabscheider oder Grobabscheider zunächst auf einen Flüssigkeitsgehalt unterhalb der Grenzbeladung, mit der der Zentrifugaltropfenabscheider beaufschlagt werden kann, abgereichert werden. Hierfür kann beispielsweise ein Verweilzeitgefäß eingesetzt werden, worin sich die Flüssigkeitströpfchen unter Einwirkung der Gravitation abscheiden, das ausreichend dimensioniert sein muss, um die erforderliche Vorabscheidung (Grobabscheidung) zu gewährleisten.

Die bislang bekannten Apparate für den Gesamtprozess der Abscheidung, das heißt Vorabscheidung (Grobabscheidung) und Feinabscheidung, hatten jedoch einen großen Platzbedarf. Darüber hinaus erfolgte die Abscheidung in unterschiedlichen Behältern.

Die GB 700 511 A beschreibt eine Vorrichtung und ein Verfahren zur Abtrennung von mitgerissenen Feststoffpartikein aus einem Gas oder Dampf, umfassend eine Abscheidekammer für ein nicht fluidisiertes Feststoffbett. einen Zyklon, der oberhalb oder innerhalb der Abscheidekammer angeordnet Ist und der einen Abführstutzen aufweist, der oberhalb der Oberfläche des fluidisierten Bettes endet sowie einen Ejektor, der im Zyklon angeordnet ist und der mit einem Sekundärgas oder -dampfstrom betrieben wird, um die Druckdifferenz zwischen Gas oder Dampf außerhalb des Abführstutzens und im Zentrum des Wirbels im Zyklon zu kompensieren.

Abweichend von der vorliegenden Erfindung endet der Abführstutzen aus dem Zyklon zwingend oberhalb des Feststoffbettes im Verweilzeitgefäß. Um dennoch einen Gas-Bypass zu verhindern, ist ein Ejektor im Zyklon angeordnet, der den Druckverlust zwischen dem Gas oder Dampf außerhalb des Abführstutzens und dem Zentrum des Wirbels im Zyklon kompensiert.

Demgegenüber ist vorliegend zum Abscheiden von Flüssigkeitströpfchen aus einem diese enthaltenden Einsatzgasstrom zwar ebenfalls eine Kombination aus einem Verweilzeitbehälter und einem Zyklon vorgesehen, wobei jedoch der Abführstutzen für die im Zentrifugaltropfenabscheider abgeschiedene Flüssigkeit oder in eine in einer Tasse im Inneren des Verweilzeitgeläßes stehende Flüssigkeit eintaucht. Diese Ausgestaltung verhindert zuverlässig einen Mitriss von Tröpfchen und gewährleistet somit hohe Abscheidegrade.

Es war demgegenüber Aufgabe der Erfindung, eine kompakte Vorrichtung zur Abscheidung von Flüssigkeitströpfchen aus einem diese enthaltenden Gasstrom zur Verfügung zu stellen, die zur Abscheidung von Flüssigkeitströpfchen aus Gasströmen mit hoher Flüssigkeitsbeladung, oberhalb der für einen Zentrifugaltropfenabscheider zulässigen Grenzbeladung geeignet ist.

Die Aufgabe wird gelöst durch eine Vorrichtung zum Abscheiden von Flüssigkeitströpfchen aus einem diese enthaltenden Einsatzgasstrom mit einer Flüssigkeitsbeladung von > 10 l Flüssigkeit/ m³ Einsatzgas, umfassend ein Verweilzeitgefäß zur Vorabscheidung eines Teiles der Flüssigkeitströpfchen aus dem Einsatzgasstrom unter Einwirkung der Gravitation, mit einer Zuführleitung für den Einsatzgasstrom in das Verweilzeitgefäß und einer Abführleitung für den an Flüssigkeitströpfchen abgereicherten, aus dem Verweilzeitgefäß ausströmenden Gasstrom und mindestens einer tangentialen Zuführung desselben zu einem Zentrifugaltropfenabscheider, worin eine Feinabscheidung erfolgt, und wobei die Abführleitung im oberen Bereich des Verweilzeitgefäßes angeordnet ist und von der Zuführleitung maximal beabstandet ist, sowie mit einer Abführleitung für die im Verweilzeitgefäß abgeschiedene Flüssigkeit am Boden desselben, und wobei als Zentrifugaltropfenabscheider ein axialsymmetrischer Apparat mit vertikaler Längsachse und kreisförmigem Querschnitt, mit einem Mantel, und Hauben am oberen und am unteren Ende des Mantels eingesetzt wird, und wobei im Bereich der unteren Haube des Zentrifugaltropfenabscheiders eine Abführleitung für die im Zentrifugaltropfenabscheider abgeschiedene Flüssigkeit angeordnet ist, die so ausgelegt ist, dass sie in die am Boden des Verweilzeitgefäßes stehende Flüssigkeit oder in eine in einer Tasse im Inneren des Verweilzeitgefäßes (1) stehende Flüssigkeit eintaucht, sowie mit einer Gasaustrittsleitung am oberen Ende des Zentrifugaltropfenabscheiders für den im Zentrifugaltropfenabscheider weiter gereinigten Gasstrom, und wobei sowohl die Zuführung des an Flüssigkeitströpfchen abgereicherten Gasstromes aus dem Verweilzeitgefäß über die Abführleitung in den Zentrifugaltropfenabscheider als auch die Ableitung der im Zentrifugaltropfenabscheider abgeschiedenen Flüssigkeit über die Abführleitung in das Verweilzeitgefäß ohne den Einsatz von Pumpen und Absperrorganen erfolgt.

Es wurde gefunden, dass es möglich ist, eine kompakte Einrichtung zur Abscheidung von Flüssigkeitströpfchen aus Gasströmen mit hoher Flüssigkeitsbeladung zur Verfügung zu stellen, die große freie Querschnitte aufweist, so dass auch bei Belegen der inneren Oberflächen die Abscheideleistung nur sehr langsam zurückgeht, weil der Abscheidemechanismus nur unwesentlich gestört wird. In Zonen mit erhöhter Gasgeschwindigkeit, beispielsweise Gaseintrittszonen, wird darüber hinaus eine teilweise Selbstreinigung erwartet.

Bevorzugt ist das Verweilzeitgefäß sowie die Anordnung der Zuführleitung für den Einsatzgasstrom in das Verweilzeitgefäß und die Abführleitung im oberen Bereich des Verweilzeitgefäßes für den an Flüssigkeitströpfchen abgereicherten, aus dem Verweilzeitgefäß ausströmenden Gasstrom, so ausgelegt, dass die Verweilzeit des Gasstromes im Verweilzeitgefäß mindestens 2 Minuten beträgt.

Bevorzugt ist das Verweilzeitgefäß als überwiegend zylindrischer Apparat, mit horizontaler Längsachse ausgebildet, wobei die Zuführleitung für den Einsatzgasstrom sowie die Abführleitung für den an Flüssigkeitströpfchen abgereicherten Gasstrom jeweils im oberen Bereich desselben und bevorzugt soweit wie möglich voneinander entfernt angeordnet sind.

Der Abführstutzen für die im Zentrifugaltropfenabscheider abgeschiedene Flüssigkeit in das Verweilzeitgefäß muss im Verweilzeitgefäß in Flüssigkeit getaucht sein, um eine Bypassströmung des Einsatzgasstromes aus dem Verweilzeitgefäß in den Zentrifugaltropfenabscheider über den Abführstutzen, ohne Vorabscheidung eines Teiles der Flüssigkeitströpfchen aus dem Einsatzgasstrom unter Einwirkung der Gravitation im Verweilzeitgefäß zu verhindern. Hierzu kann der Abführstutzen so ausgelegt sein, dass er unterhalb des Flüssigkeitsniveaus der am Boden des Verweilzeitgefäßes abgeschiedenen Flüssigkeit endet, es ist jedoch auch möglich, dass der Abführstutzen in einer Tasse unterhalb des Flüssigkeitsspiegels einer darin befindlichen Flüssigkeit endet. Die Tasse muss im Inneren des Verweilzeitgefäßes angeordnet sein, es ist jedoch in ihrer Geometrie, ihren Abmessungen sowie ihrer Positionierung im Verweilzeitgefäß nicht eingeschränkt. Bevorzugt ist die in der Tasse befindliche Flüssigkeit dieselbe wie die im Verweilzeitgefäß abgeschiedene Flüssigkeit. Die Ausführungsvariante mit Tauchung des Abführstutzens in eine mit Flüssigkeit gefüllte Tasse hat gegenüber der Ausführungsvariante mit Tauchung in die am Boden des Verweilzeitgefäßes stehende Flüssigkeit den Vorteil, dass der Flüssigkeits-Holdup in der Tasse kleiner seiner kann.

In einer bevorzugten Ausführungsform weist der Zentrifugaltropfenabscheider über dem Abführstutzen am unteren Ende desselben einen Apexkegel auf, sowie Strömungsbrecher in Form von senkrecht auf dem Boden der unteren Haube radial angeordneten Blechen.

Aus fertigungstechnischen Gründen ist ein unten offener Apexkegel bevorzugt.

In einer weiteren bevorzugten Ausführungsform weist der Zentrifugaltropfenabscheider im Bereich der oberen Haube um die Gasaustrittsleitung herum eine nach unten offene Abtropfschürze auf, an der Flüssigkeitströpfchen aus dem Gasstrom, der über die Gasaustrittsleitung austritt, abgeschieden werden.

Die Abtropfschürze ist bevorzugt um etwa mindestens 20 % länger als der in den Innenraum des Zentrifugaltropfenabscheiders hineinragende Teil der Gasaustrittsleitung, die auch als Tauchrohr bezeichnet wird.

Die tangentiale Zuführung des aus dem Verweilzeitgefäß über die Abführleitung in den Zentrifugaltropfenabscheider ausströmenden Gasstromes erfolgt über einen Einlauf, der geometrisch unterschiedlich ausgestattet sein kann: er kann beispielsweise kreisförmig sein, was insbesondere bei Druckapparaten vorteilhaft ist, quadratisch oder auch rechteckig. In einer bevorzugten Ausführungsform erfolgt die tangentiale Zuführung des aus dem Verweilzeitgefäß ausströmenden Gasstromes über die Abführleitung in den Zentrifugaltropfenabscheider über einen rechteckigen Einlauf, dessen Höhe größer als seine Breite ist. Bevorzugt liegt das Verhältnis von Höhe zu Breite des rechteckigen Einlaufs in den Zentrifugaltropfenabscheider im Bereich von 2,5 : 1 bis 5 : 1, bevorzugt bei 3 1.

In einer weiteren bevorzugten Ausführungsform sind im Bereich der oberen Haube des Zentrifugaltropfenabscheiders zwei, drei oder mehrere, symmetrisch am Umfang der oberen Haube angeordnete Eintrittsöffnungen für eine tangentiale Zuführung von Spülflüssigkeit, in derselben Richtung wie die Zuführung des abgereicherten Gasstromes aus dem Verweilzeitgefäß in den Zentrifugaltropfenabscheider über die Abführleitung, vorgesehen.

Die Spülflüssigkeit wird auf das jeweilige Stoffsystem abgestimmt, insbesondere soll sie unter Verfahrensbedingungen, nicht verdampfen oder nur einen geringen Dampfdruck aufweisen und soll bevorzugt mit der aus dem Einsatzgasstrom abgeschiedenen Flüssigkeit mischbar sein.

Die Erfindung wird im Folgenden anhand einer Zeichnung näher erläutert.

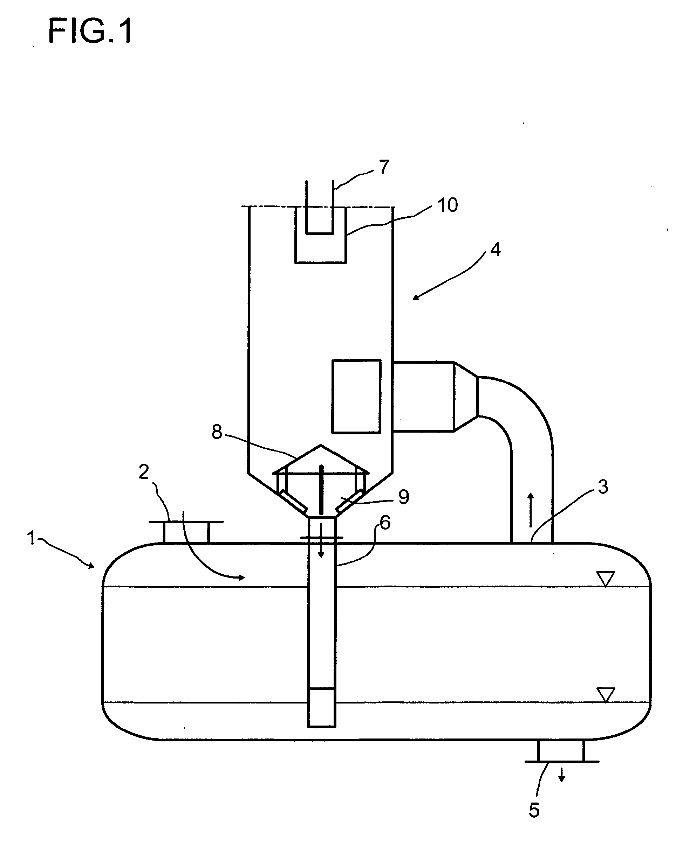

Die einzige Figur 1 zeigt
einen Längsschnitt durch eine Ausführungsform eines erfindungsgemäßen Apparates zur Abscheidung von Flüssigkeitströpfchen aus einem Gasstrom.

Der in Figur 1 dargestellte kompakte Abscheider umfasst ein Verweilzeitgefäß 1 mit Zuführleitung 2 für den Einsatzgasstrom und Abführleitung 3 für den an Flüssigkeitströpfchen abgereicherten, aus dem Verweilzeitgefäß 1 ausströmenden Gasstrom und tangentiale Zuführung desselben über einen in der in der Figur dargestellten bevorzugten Ausführungsform eckigen Einlauf zu einem Zentrifugaltropfenabscheider 4. Die Abführleitung 3 ist im oberen Bereich und dem Einlauf 2 angeordnet. Das Verweilzeitgefäß 1 weist an seinem unteren, der Zuführleitung 2 gegenüberliegenden Ende eine Abführleitung 5 für die im Verweilzeitgefäß abgeschiedene Flüssigkeit auf. Der Zentrifugaltropfenabscheider 4 ist in der in der Figur dargestellten bevorzugten Ausführungsform ein hochzylindrischer Apparat, mit Zuführung des teilweise abgereicherten Gasstromes aus dem Verweilzeitgefäß 1 über die Abführleitung 3 und Ableitung des gereinigten Gasstromes über den zentralen Gasaustrittsstutzen 7. In der in der Figur dargestellten bevorzugten Ausführungsform ist im Bereich der unteren Haube, die bevorzugt kegelstumpfförmig ausgebildet ist, ein unten offener Apexkegel 8 zum Schutz der bereits abgeschiedenen Flüssigkeit und zum Stabilisieren des zentralen Wirbels angeordnet, sowie Strömungsbrecher 9 in Form von senkrecht auf dem Boden der unteren Haube, radial angeordneten Blechen. Die Abführleitung 6 am unteren Ende des Zentrifugaltropfenabscheiders reicht bis unterhalb des Flüssigkeitsspiegels im Verweilzeitgefäß 1.

## Patentansprüche

1. Verfahren zum Abscheiden von Flüssigkeitströpfchen aus einem diese enthaltenden Einsatzgasstrom mit einer Flüssigkeitsbeladung des Einsatzgasstromes von größer als 10 I Flüssigkeit / m³ Einsatzgas, in einer Vorrichtung umfassend ein Verweilzeitgefäß (1) zur Vorabscheidung eines Teiles der Flüssigkeitströpfchen aus dem Einsatzgasstrom unter Einwirkung der Gravitation, mit einer Zuführleitung (2) für den Einsatzgasstrom in das Verweilzeitgefäß (1) und einer Abführleitung (3) für den an Flüssigkeitströpfchen abgereicherten, aus dem Verweilzeitgefäß (1) ausströmenden Gasstrom und tangentiale Zuführung desselben in einen Zentrifugaltropfenabscheider (4), wobei die Abführleitung (3) im oberen Bereich des Verweilzeitgefäßes (1) oberhalb des Flüssigkeitsspiegels der abgeschiedenen Flüssigkeit angeordnet und von der Zuführleitung (2) soweit beabstandet ist, dass die Verweilzeit des Gasstromes im Verweilzeitgefäß (1) maximal ist, sowie mit einer Abführleitung (5) für die im Verweilzeitgefäß (1) abgeschiedene Flüssigkeit am Boden desselben,
und wobei als Zentrifugaltropfenabscheider (4) ein axialsymmetrischer Apparat mit vertikaler Längsachse und kreisförmigem Querschnitt, mit einem Mantel, und Hauben am oberen und am unteren Ende des Mantels eingesetzt wird, und wobei im Bereich der unteren Haube des Zentrifugaltropfenabscheiders (4) ein Abführstutzen (6) für die im Zentrifugaltropfenabscheider (4) abgeschiedene Flüssigkeit angeordnet ist, der so dimensioniert ist, dass er in die am Boden des Verweilzeitgefäßes (1) stehende Flüssigkeit oder in eine in einer Tasse im Inneren des Verweilzeitgefäßes (1) stehende Flüssigkeit eintaucht, sowie mit einem zentralen Gasaustrittsstutzen (7) am oberen Ende des Zentrifugaltropfenabscheiders (4) für den im Zentrifugaltropfenabscheider (4) weiter gereinigten Gasstrom, und wobei sowohl-die Zuführung des an Flüssigkeitströpfchen abgereicherten Gasstromes aus dem Verweilzeitgefäß (1) über die Abführleitung (3) als auch die Ableitung der im Zentrifugaltropfenabscheider (4) abgeschiedenen Flüssigkeit über die Leitung (6) in das Verweilzeitgefäß (1) ohne den Einsatz von Pumpen und Absperrorganen erfolgt.

2. Verfahren nach Anspruch 1, **dadurch gekennzeichnet, dass** die Verweilzeit des Gasstromes im Verweilzeitgefäß (1) mindestens zwei Minuten beträgt.

3. Vorrichtung zum Abscheiden von Flüssigkeitströpfchen aus einem diese enthaltenden Einsatzgasstrom mit einer Flüssigkeitsbeladung von > 10 l Flüssigkeit/ m³ Einsatzgas, umfassend ein Verweilzeitgefäß (1) zur Vorabscheidung eines Teiles der Flüssigkeitströpfchen aus dem Einsatzgasstrom unter Einwirkung der Gravitation, mit einer Zuführleitung (2) für den Einsatzgasstrom in das Verweilzeitgefaß (1) und einer Abführleitung (3) für den an Flüssigkeitströpfchen abgereicherten, aus dem Verweilzeitgefäß (1) ausströmenden Gasstrom und mindestens einer tangentialen Zuführung desselben zu einem Zentrifugaltropfenabscheider (4), worin eine Feinabscheidung erfolgt,
und wobei die Abführleitung (5) Im oberen Bereich des Verweilzeitgefäßes (1) angeordnet ist und von der Zuführleitung (2) maximal beabstandet ist, sowie mit einer Abführleitung für die im Verweilzeitgefäß (1) abgeschiedene Flüssigkeit am Boden desselben,
und wobei als Zentrifugaltropfenabscheider (4) ein axialsymmetrischer Apparat mit vertikaler Längsachse und kreisförmigem Querschnitt, mit einem Mantel, und Hauben am oberen und am unteren Ende des Mantels eingesetzt wird,
und wobei im Bereich der unteren Haube des Zentrifugaltropfenabscheiders (4) eine Abführleitung (3) für die im Zentrifugaltropfenabscheider (4) abgeschiedene Flüssigkeit angeordnet ist, die so ausgelegt ist, dass sie in die am Boden des Verweilzeitgefäßes (1) stehende Flüssigkeit oder in eine in einer Tasse im Inneren des Verweilzeitgefäßes (1) stehende Flüssigkeit eintaucht, sowie mit einer Gasaustrittsleitung (7) am oberen Ende des Zentrifugaltropfenabscheiders (4) für den im Zentrifugaltropfenabscheider (4) weiter gereinigten Gasstrom,
und wobei sowohl die Zuführung des an Flüssigkeitströpfchen abgereicherten Gasstromes aus dem Verweilzeitgefäß (1) über die Abführleitung (3) in den Zentrifugaltropfenabscheider (4) als auch die Ableitung der im Zentrifugaltropfenabscheider (4) abgeschiedenen Flüssigkeit über die Abführleitung (6) in das Verweilzeitgefäß (1) ohne den Einsatz von Pumpen und Absperrorganen erfolgt, **dadurch gekennzeichnet, dass** das Verweilzeitgefäß (1) als überwiegend zylindrischer Apparat, mit horizontaler Längsachse ausgebildet ist, und wobei die Zuführleitung (2) für den Einsatzgasstrom sowie die Abführleitung (3) für den an Flüssigkeitströpfchen abgereicherten Gasstrom jeweils im oberen Bereich desselben und bevorzugt soweit wie möglich voneinander entfernt, an beiden Enden des Verweilzeitgefäßes (1) angeordnet sind.

4. Vorrichtung nach Anspruch 3, **dadurch gekennzeichnet, dass** der Zentrifugaltropfenabscheider (4) über dem Abführstutzen (6) am unteren Ende desselben einen Apexkegel (8) sowie Strömungsbrecher (9), in Form von senkrecht auf dem Boden der unteren Haube, radial angeordneten Blechen, aufweist.

5. Vorrichtung nach einem der Ansprüche 3 oder 4, **dadurch gekennzeichnet, dass** der Zentrifugaltropfenabscheider (4) im Bereich der oberen Haube um die Gasaustrittsleitung (7) herum eine nach unten offene Abtropfschürze (10) aufweist, an der Flüssigkeitströpfchen aus dem Gasstrom, der über die Gasaustrittsleitung (7) austritt, abgeschieden werden.

6. Vorrichtung nach einem der Ansprüche 3 bis 5, **dadurch gekennzeichnet, dass** die tangentiale Zuführung des aus dem Verweilzeitgefäß (1) ausströmenden Gasstroms über die Abführleitung (3) in den Zentrifugaltropfenabscheider (4) über einen rechteckigen Einlauf erfolgt, dessen Höhe größer als seine Breite ist.

7. Vorrichtung nach Anspruch 6, **dadurch gekennzeichnet, dass** das Verhältnis von Höhe zu Breite des rechteckigen Einlaufs in den Zentrifugaltropfenabscheider (4) im Bereich von 2,5 : 1 bis 5 : 1, bevorzugt bei 3 : 1, liegt.

## Claims

1. A method for the separation of liquid droplets out of a feed gas stream containing these, with a liquid charge of the feed gas stream greater than 10 1 of liquid/m³ of feed gas, in an apparatus comprising a dwell-time vessel (1) for the preseparation of some of the liquid droplets out of the feed gas stream under the action of gravitation, with a supply line (2) for the feed gas stream into the dwell-time vessel (1) and with a discharge line (3) for the gas stream, depleted of liquid droplets and flowing out of the dwell-time vessel (1), and the tangential supply of the said gas stream, into a centrifugal drop separator (4), the discharge line (3) being arranged in the upper region of the dwell-time vessel (1) above the liquid level of the separated liquid and being spaced apart from the supply line (2) to an extent such that the dwell time of the gas stream in the dwell-time vessel (1) is maximal, and also with a discharge line (5) for the liquid, separated in the dwell-time vessel (1), at the bottom of the latter, and the centrifugal drop separator (4) used being an axially symmetrical appliance with a vertical longitudinal axis and a circular cross section, with a casing and with hoods at the upper and at the lower end of the casing, and a discharge connection piece (6) for the liquid separated in the centrifugal drop separator (4) being arranged in the region of the lower hood of the centrifugal drop separator (4) and being dimensioned such that it penetrates into the liquid standing at the bottom of the dwell-time vessel (1) or into a liquid standing in a bowl inside the dwell-time vessel (1), and also with a central gas outlet connection piece (7) at the upper end of the centrifugal drop separator (4) for the gas stream further purified in a centrifugal drop separator (4), and both the supply of the gas stream depleted of liquid droplets out of the dwell-time vessel (1) via the discharge line (3) and the discharge of the liquid, separated in the centrifugal drop separator (4), via the line (6) into the dwell-time vessel (1) taking place without the use of pumps and shut-off members.

2. The method according to claim 1, wherein the dwell time of the gas stream in the dwell-time vessel (1) amounts to at least two minutes.

3. An apparatus for the separation of liquid droplets out of a feed gas stream containing these, with a liquid charge of > 10 1 of liquid/m³ of feed gas, comprising a dwell-time vessel (1) for the preseparation of some of the liquid droplets out of the feed gas stream under the action of gravitation, with a supply line (2) for the feed gas stream into the dwell-time vessel (1) and with a discharge line (3) for the gas stream, depleted of liquid droplets and flowing out of the dwell-time vessel (1), and for the at least tangential supply of the said gas stream, to a centrifugal drop separator (4), in which fine separation takes place, and the discharge line (5) being arranged in the upper region of the dwell-time vessel (1) and being spaced apart to a maximum extent from the supply line (2), and also with a discharge line for the liquid, separated in the dwell-time vessel (1), at the bottom of the latter, and the centrifugal drop separator (4) used being an axially symmetrical appliance with a vertical longitudinal axis and a circular cross section, with a casing and with hoods at the upper and at the lower end of the casing, and a discharge line (3) for the liquid separated in the centrifugal drop separator (4) being arranged in the region of the lower hood of the centrifugal drop separator (4) and being designed such that it penetrates into the liquid standing at the bottom of the dwell-time vessel (1) or into a liquid standing in a bowl inside the dwell-time vessel (1), and also with a gas outlet line (7) at the upper end of the centrifugal drop separator (4) for the gas stream further purified in the centrifugal drop separator (4), and both the supply of the gas stream depleted of liquid droplets out of the dwell-time vessel (1) via the discharge line (3) into the centrifugal drop separator (4) and the discharge of the liquid, separated in the centrifugal drop separator (4), via the discharge line (6) into the dwell-time vessel (1) taking place without the use of pumps and shut-off members, **characterized in that** the dwell-time vessel (1) is designed as a predominantly cylindrical appliance with a horizontal longitudinal axis, and the supply line (2) for the feed gas stream and the discharge line (3) for the gas stream depleted of liquid droplets being arranged in each case in the upper region of the said dwell-time vessel and preferably as far away from one another as possible at both ends of the dwell-time vessel (1).

4. The apparatus according to claim 3, wherein the centrifugal drop separator (4) has above the discharge connection piece (6), at the lower end of the latter, an apex cone (8) and flow breaker (9) in the form of plates radially arranged vertically on the bottom of the lower hood.

5. The apparatus according to either one of claims 3 and 4, wherein the centrifugal drop separator (4) has in the region of the upper hood, around the gas outlet line (7), a downwardly open drip skirt (10) at which liquid droplets are separated out of the gas stream which flows out via the gas outlet line (7).

6. The apparatus according to one of claims 3 to 5, wherein the tangential supply of the gas stream flowing out of the dwell-time vessel (1) takes place via the discharge line (3) into the centrifugal drop separator (4) via a rectangular inflow, the height of which is greater than its width.

7. The apparatus according to claim 6, wherein the ratio of height to width of the rectangular inflow into the centrifugal drop separator (4) lies in the range of 2.5:1 to 5:1, preferably at 3:1.

## Revendications

1. Procédé pour la séparation de gouttelettes de liquide d'un courant de gaz d'alimentation les contenant, avec une charge de liquide du courant de gaz d'alimentation supérieure à 10 1 de liquide par m³ de gaz d'alimentation, dans un dispositif comprenant un récipient de séjour (1) pour la séparation préalable d'une partie des gouttelettes de liquide du courant de gaz d'alimentation sous l'effet de la gravité, avec une conduite d'apport (2) pour le courant de gaz d'alimentation dans le récipient de séjour (1) et une conduite d'évacuation (3) pour le courant de gaz appauvri en gouttelettes de liquide, sortant du récipient de séjour (1), et pour l'apport tangentiel de celui-ci dans un séparateur de gouttes centrifuge (4), la conduite d'évacuation (3) étant disposée dans la région supérieure du récipient de séjour (1) au-dessus du niveau de liquide du liquide séparé et étant espacée de la conduite d'apport (2) dans une mesure telle que le temps de séjour du courant de gaz dans le récipient de séjour (1) soit maximal, et avec une conduite d'évacuation (5) pour le liquide séparé dans le récipient de séjour (1) au fond de ce dernier,
et un appareil à symétrie axiale avec un axe longitudinal vertical et une section transversale circulaire, comprenant une enveloppe et des couvercles à l'extrémité supérieure et à l'extrémité inférieure de l'enveloppe, étant utilisé en tant que séparateur de gouttes centrifuge (4) et, dans la région du couvercle inférieur du séparateur de gouttes centrifuge (4), étant disposée une tubulure d'évacuation (6) pour le liquide séparé dans le séparateur de gouttes centrifuge (4), laquelle tubulure est dimensionnée de telle sorte qu'elle plonge dans le liquide se trouvant au fond du récipient de séjour (1) ou dans un liquide se trouvant dans une coupelle à l'intérieur du récipient de séjour (1), et avec une tubulure de sortie de gaz centrale (7) à l'extrémité supérieure du séparateur de gouttes centrifuge (4) pour le courant de gaz nettoyé davantage dans le séparateur de gouttes centrifuge (4), et l'apport du courant de gaz appauvri en gouttelettes de liquide à partir du récipient de séjour (1) par le biais de la conduite d'évacuation (3) ainsi que l'évacuation du liquide séparé dans le séparateur de gouttes centrifuge (4) par le biais de la conduite (6) dans le récipient de séjour (1) s'effectuant sans l'utilisation de pompes et d'organes d'arrêt.

2. Procédé selon la revendication 1, **caractérisé en ce que** le temps de séjour du courant de gaz dans le récipient de séjour (1) est d'au moins deux minutes.

3. Dispositif pour séparer des gouttelettes de liquide d'un courant de gaz d'alimentation les contenant, avec une charge de liquide > 10 1 de liquide par m³ de gaz d'alimentation, comprenant un récipient de séjour (1) pour la séparation préalable d'une partie des gouttelettes de liquide du courant de gaz d'alimentation sous l'effet de la gravité, avec une conduite d'apport (2) pour le courant de gaz d'alimentation dans le récipient de séjour (1) et une conduite d'évacuation (3) pour le courant de gaz appauvri en gouttelettes de liquide, sortant du récipient de séjour (1), et au moins un apport tangentiel de celui-ci à un séparateur de gouttes centrifuge (4), dans lequel s'effectue une séparation fine,
et la conduite d'évacuation (5) étant disposée dans la région supérieure du récipient de séjour (1) et étant espacée au maximum de la conduite d'apport (2), et comprenant une conduite d'évacuation pour le liquide séparé dans le récipient de séjour (1) au fond de ce dernier,
et un appareil à symétrie axiale avec un axe longitudinal vertical et une section transversale circulaire, comprenant une enveloppe et des couvercles à l'extrémité supérieure et à l'extrémité inférieure de l'enveloppe, étant utilisé en tant que séparateur de gouttes centrifuge (4),
et, dans la région du couvercle inférieur du séparateur de gouttes centrifuge (4), étant disposée une conduite d'évacuation (3) pour le liquide séparé dans le séparateur de gouttes centrifuge (4), laquelle est conçue de telle sorte qu'elle plonge dans le liquide se trouvant au fond du récipient de séjour (1) ou dans un liquide se trouvant dans une coupelle à l'intérieur du récipient de séjour (1), et avec une conduite de sortie de gaz (7) à l'extrémité supérieure du séparateur de gouttes centrifuge (4) pour le courant de gaz nettoyé davantage dans le séparateur de gouttes centrifuge (4),
et l'apport du courant de gaz appauvri en gouttelettes de liquide à partir du récipient de séjour (1) par le biais de la conduite d'évacuation (3) dans le séparateur de gouttes centrifuge (4) ainsi que l'évacuation du liquide séparé dans le séparateur de gouttes centrifuge (4) par le biais de la conduite d'évacuation (6) dans le récipient de séjour (1) s'effectuant sans l'utilisation de pompes et d'organes d'arrêt, **caractérisé en ce que** le récipient de séjour (1) est réalisé sous forme d'appareil principalement cylindrique avec un axe longitudinal horizontal, et la conduite d'apport (2) pour le courant de gaz d'alimentation ainsi que la conduite d'évacuation (3) pour le courant de gaz appauvri en gouttelettes de liquide étant disposées à chaque fois dans la région supérieure du récipient de séjour et de préférence à une distance maximale l'une de l'autre, aux deux extrémités du récipient de séjour (1).

4. Dispositif selon la revendication 3, **caractérisé en ce que** le séparateur de gouttes centrifuge (4) présente, au-dessus de la tubulure d'évacuation (6), à son extrémité inférieure, un cône de sommet (8), ainsi que des brise-flux (9) sous la forme de tôles verticales disposées radialement au fond du couvercle inférieur.

5. Dispositif selon l'une quelconque des revendications 3 ou 4, **caractérisé en ce que** le séparateur de gouttes centrifuge (4) présente, dans la région du couvercle supérieur, autour de la conduite de sortie de gaz (7), un tablier d'égouttage ouvert vers le bas (10) au niveau duquel des gouttelettes de liquide sont séparées du courant de gaz qui sort par la conduite de sortie de gaz (7).

6. Dispositif selon l'une quelconque des revendications 3 à 5, **caractérisé en ce que** l'apport tangentiel du courant de gaz sortant du récipient de séjour (1) s'effectue par le biais de la conduite d'évacuation (3) dans le séparateur de gouttes centrifuge (4) par le biais d'une entrée rectangulaire, dont la hauteur est supérieure à sa largeur.

7. Dispositif selon la revendication 6, **caractérisé en ce que** le rapport hauteur/largeur de l'entrée rectangulaire dans le séparateur de gouttes centrifuge (4) est de l'ordre de 2,5:1 à 5:1, de préférence de 3:1.
